# EUROPEAN PATENT SPECIFICATION

(11) **EP 0 331 257 B1**
(45) Date of publication and mention of the grant of the patent: **11.01.1995**
(21) Application number: 89200476.3
(22) Date of filing: 27.02.1989
(51) Int. Cl.: H04B 1/20

(54) **Universal remote control transmitter with simplified device indentification**
Universeller Fernsteuerungs-Sender mit vereinfachter Apparatidentifizierung
Emetteur universel de commande à distance avec identification simplifiée de l'appareil

(30) Priority: 04.03.1988 US 164314
(43) Date of publication of application: 06.09.1989
(73) Proprietor: PHILIPS ELECTRONICS NORTH AMERICA CORPORATION, New York, N.Y. 10017 (US)
(72) Inventor: McConnell, Donald Patrick, NL-5656 AA Eindhoven (NL); McIntyre, William Russell, NL-5656 AA Eindhoven (NL)
(74) Representative: Kooiman, Josephus Johannes Antonius

(56) References cited:
- EP-A- 0 117 121
- EP-A- 0 122 548
- EP-A- 0 203 668
- EP-A- 0 223 311
- US-A- 4 703 359

## Description

The present invention relates to a remote control transmitter for remotely controlling a plurality of devices and a method therefor.

At present, many home appliances are available which can be remote controlled by the user. For example, a television set can be turned on and off, a channel can be selected, a video cassette recorder controlled to play or record, etc. However, each manufacturer effects this control differently. The bit pattern required to carry out a given operation differs for different manufacturers. Similarly, the signal format, such as the bit timing, the number of bits per word, the width of the pulses, the modulation frequency, if any, applied to each pulse, the presence of, length of, and format of start, lead or trailer pulses and the number of correct receptions of a particular command required to activate the appliance to carry out the selected operation varies from manufacturer to manufacturer. The signal format may also be different for different model numbers of the same manufacturer.

A remote control transmitter for remotely controlling such a plurality of devices whereby at least two devices of the same category require a different signal format, is disclosed in the European patent application EP-A-0 203 668. The known transmitter comprises: memory means permanently storing specific device formatting data specifying the signal format for the plurality of devices at respective memory addresses, keyboard means having a plurality of keys for generating keyboard output signals for a selected category of said plurality of devices, means for addressing said memory means to read specific device formatting data for a selected category in response to activation of said keys, and transmitter means operative under control of said specific device formatting data to transmit device control signals towards said selected one of said plurality of devices.

In order to define which signal format is used for a selected category of devices, a user-operable model selector switch is individually provided for each selectable appliance category. The prior art transmitter requires a relatively awkward setting of switches to determine which data for controlling the particular device must be read out from the memory.

US Patent 4,703,359 discloses a similar remote control transmitter. In a learning process, this transmitter transmits a predetermined control signal in a variety of signal formats until the controlled appliance responds correctly. The correct response is to be observed and confirmed by the user. This type of transmitter thus requires a time consuming process of scanning all device control signals.

### SUMMARY OF THE INVENTION

It is an object of the present invention to furnish a remote control transmitter capable of controlling different types of appliances manufactured by different manufacturers which provides an easy and rapid method for reading out the correct bit pattern and formatting data from the memory storing such data for devices to be controlled.

According to the invention, the transmitter is characterized in that the keyboard means comprise a key for generating an entry initiate signal, and that the addressing means are adapted to read the device formatting data for the selected category in accordance with keyboard output signals being generated following said entry initiate signal. The present invention thus constitutes a direct entry system for remote control transmitters in which the signal format for a device to be controlled is entered by a one or two digit number, all of the signal formats for the different categories and manufacturers being permanently stored in a memory at respective memory addresses. The user first activates an entry initiate key. Thereafter the user selects one of a plurality of keys, each signifying a particular category. Finally, the user activates at least one key (two keys in a preferred embodiment), to signify the address in the memory storing the specific device formatting data. This data is read out and applied to a microprocessor which, in turn, controls the sending of correctly formatted signals to the transmitter driver circuit. Preferably, the transmitters are infrared light emitting diodes.

Detailed operation as well the implementation of the present invention will be explained with reference to drawing.

### BRIEF DESCRIPTION OF THE DRAWING

Fig. 1 is a block diagram of a remote control transmitter and associated apparatus incorporating the present invention;
Fig. 2 is a flow chart of the main microprocessor program;
Fig. 3 is a flow chart of the multikey program;
Fig. 4 and 5 are, together, the flow chart for the direct entry identify program; and
Fig. 6 is the flow chart for the transmit program.

### DESCRIPTION OF THE PREFERRED EMBODIMENTS

The present invention is disclosed herein as part of the remote control transmitter described in the copending application, Serial No. 739,357, (US-A-4774511=EP-A-0 203668) which is herein incorporated by reference. Only the parts of the disclosure of the parent application which are required for understanding the present invention will be repeated below. While the so-described apparatus constitutes a preferred embodiment, the present invention is also useable with other types of remote control transmitters or units.

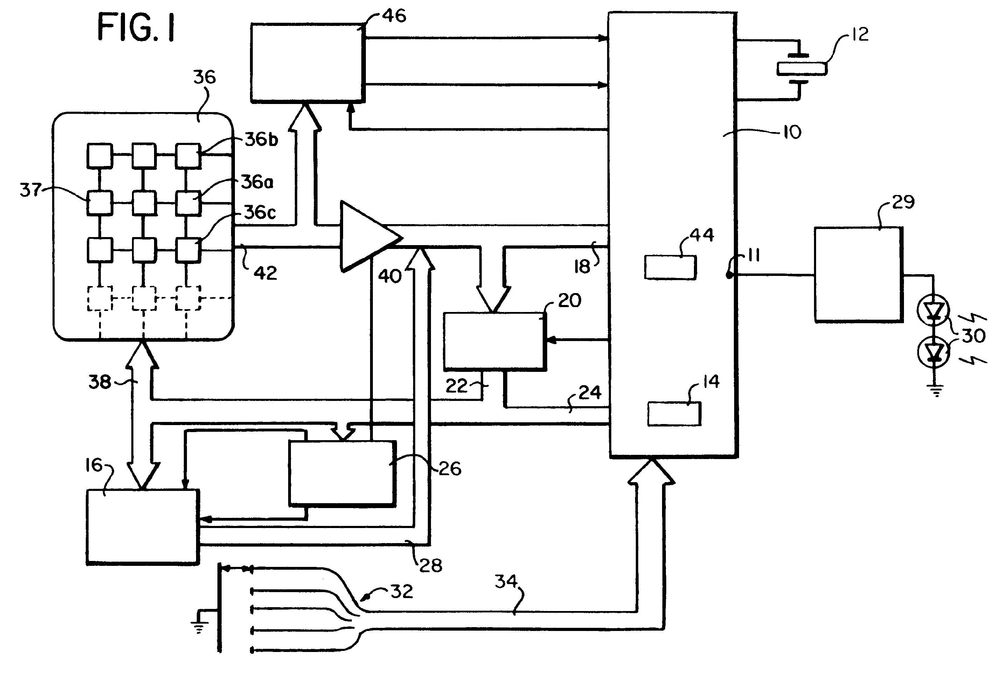

Referring now to the drawing, in Fig. 1, a microprocessor, which is the central control unit for the system, is denoted by reference numeral 10. The timing of microprocessor 10 is controlled by a crystal time base 12. In normal operation, microprocessor 10 first receives data from two or even only one user-controlled selector device described in detail below. The selector device is utilized by a "decode" program located in an internal ROM 14 of microprocessor 10 to calculate an address for an electrically programmable read only memory (EPROM) 16 separate from microprocessor 10. The memory could equally well be an EEPROM or a ROM and internal rather than external to microprocessor 10. The generated address is then put out on a two-way, eight line bus 18 and an address latch 20 is enabled. The address is stored in latch 20 and, subsequently, as timed by microprocessor 10, the address from latch 20 is applied to an eight line bus 22, and combined with the signal on three lines 24 emanating from microprocessor 10. The combined address is applied to an address decoder 26 as well as EPROM 16. Address decoder 26 first enables a "select" line and, thereafter, an "output enable" line for EPROM 16, again under microprocessor control. Data from EPROM 16 is transmitted through an eight line bus 28 and bus 18 back to microprocessor 10. The data from EPROM 16 is then used within microprocessor 10 to energize an infrared transmission drive circuit 29 so that infrared light emitting diodes 30 transmit signals with a corresponding signal structure, i.e. bit pattern and signal format. The transmitted infrared radiation is received by the appliance and causes it to operate as desired by the user.

It should be noted that the word "format" as used herein refers to parameters such as pulse width, frequency, number of bits per word, modulating frequency, if any, applied to each pulse, the presence of, length of, and shape of start, lead or trailer pulses and the number of correct receptions of a particular command required to activate the appliance to carry out the selected operation. Other parameters can be added if required, and nonrelevant parameters can be omitted depending upon the particular appliances to be controlled.

In a preferred embodiment, the microprocessor is a Hitachi HD6301 operated in mode 6 with an oscillator frequency of 4MHz and an instruction cycle time of 1 microsecond. This speed is necessary in order to generate the carrier output frequencies of up to 55 KHz required by some IR control systems.

Tne first of the user-operated selector devices is a category selector switch 32, by which the user selects the category of the appliance which is to be controlled. Its output is connected to microprocessor 10 through five lines 34, the selected line being grounded. A set of category bits signifying the user-selected category is stored in a random access memory (RAM) 44 in microprocessor 10. In the example illustrated in Fig. 1, the following categories are provided: a television receiver (TV), a video cassette recorder (VCR), a disc player (disc), an audio system (audio), and an auxiliary input (aux) suitable, for example, for controlling a cable converter. This selector switch is present for functions outside of the present invention. It can be omitted with respect to the direct keyboard entry method and system according to this invention.

In accordance with the present invention, the second selector device, keyboard 36, is used for direct entry of data signifying the manufacturer and model number of the device to be controlled. This function is in addition to the other functions carried out by means of keyboard 36 in the parent application and in U.S. 4,703,359, a continuation-in-part of the same parent. (It shoudl be noted that Fig. 1 hereof is identical to Fig. 1 of U.S. Patent 4,703,359, both the patent and the present application being improvements on the apparatus illustrated in the parent application. Specifically, switches 30a and 30b of Fig. 1 of the parent application are omitted in both continuations-in-part. In the ′359 patent, the switches are replaced by an operation in which a command is transmitted in different formats until the controlled device executes the commanded operation. In the present invention, direct entry through the keyboard of data permitting the correct address for the tables in EPROM 16 to be formed is provided instead.)

Keyboard 36 is a 3x11 matrix, addressable by 11 address lines of a bus 38. Bus 38 is constituted by eight line bus 22 and three line bus 24. During a keyboard scan, address decoder 26 enables a buffer 40, and each of the eleven columns is energized in turn by microprocessor 10 via bus 38. An output is obtained on the one of the three output lines 42 connected to an energized column by a user-depressed key. This output is then transmitted through buffer 40 and bus 18 to microprocessor 10. There, the result of the keyboard scan is stored in RAM 44. It should be noted that keyboard 36 has individual power keys marked "CBL", "VCR", and "TV", etc., respectively marked 36a, 36b and 36c in Fig. 1. It further has a record key, as well as keys numbered from one to nine and 0, channel up and down keys, etc.

The user procedure for direct keyboard entry is first to press the "entry initiate" button, then to press one of the power buttons described above in order to select the category, and then to enter two digits which together signify the manufacturer and model number. This information is available, for example, in an instruction book. This keyboard-entry data is also stored in RAM 44. As illustrated in Fig. 1, RAM 44 is internal to microprocessor 10. An external memory could be used equally well.

EPROM 16 contains command look-up tables which, according to the present invention, can be indexed or addressed by data in RAM 44 derived solely from entries on keyboard 18. Alternatively, keyboard entry data without the power button activation may be combined with category selector switch data to provide the necessary pointers for addressing items in the look-up tables in EPROM 16.

The data read out from the specific device tables, is passed to a formatter, also stored in EPROM 16. Each formatter has a device-specific program designed to generate the precise carrier frequency, pulse width, pulse modulation and overall timing format required by the particular device to be controlled.

The data output lines from keyboard 36 are also connected to the inputs of a stand-by circuit 46. A first and second output of stand-by circuit 46 is connected to a reset and stand-by input of microprocessor 10, respectively.

Standby circuit 46 was illustrated in greater detail in copending US-A-4774511. Its description will not be repeated here since it is not essential for an understanding of the present invention.

Finally, an output port 11 of microprocessor 10 is connected to IR drive circuit 29 which in turn drives infrared light emitting diodes (LED's) 30.

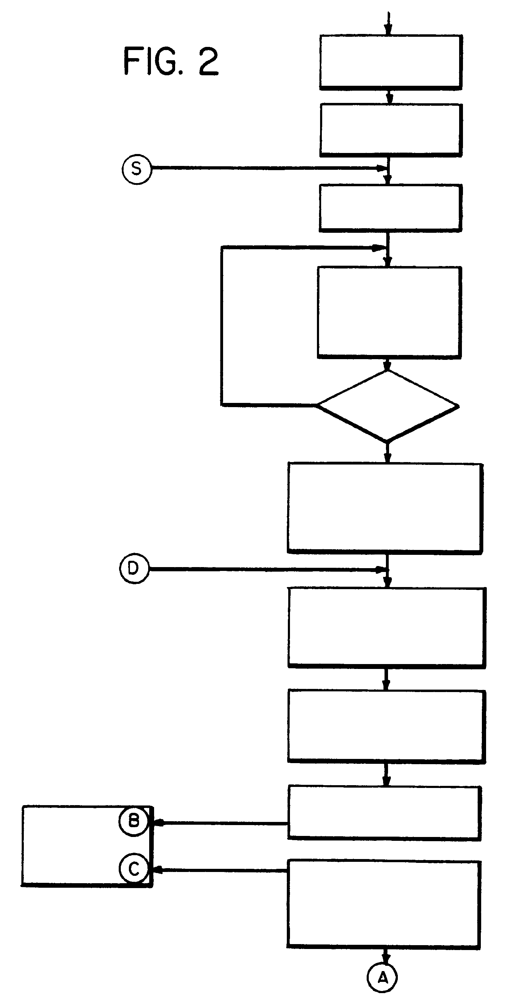

More detailed operation of the above-described equipment, with particular emphasis on the direct entry keyboard mode will now be described with reference to flow charts, Figs. 2, 3, 4 and 5.

Referring now to Fig. 2, upon insertion of the battery, microprocessor initialization takes place. RAM 44, the input-output ports, and a flag in the internal memory of the microprocessor are set to initial conditions. Data in RAM 44 is set to address the first entry in the tables in EPROM 16. The microprocessor then enters the sleep mode. In this mode, stand-by circuit 46 grounds the reset and stand-by pins of the microprocessor. A circuit internal to the microprocessor shuts down all internal circuitry except for memory and the circuitry monitoring the "stand-by" and "reset" lines. This state continues until a key of keyboard 36 is pressed.

Upon pressing of a key, the "reset" and "stand-by" circuits in microprocessor 10 are energized. Monitoring of the stand-by and reset lines as well as the previously set flag causes the microprocessor to energize the latch for stand-by circuit 46 and to enable address latch 20.

The microprocessor then executes a keyboard scan program stored in ROM 14 via bus 38. If a key on keyboard 36 is pressed, one of the keyboard rows is connected to its column, causing one of the lines of bus 42 to be at a high level at a specific step in the program. This information is utilized by a program in ROM 14 to determine the position number of any pressed key.

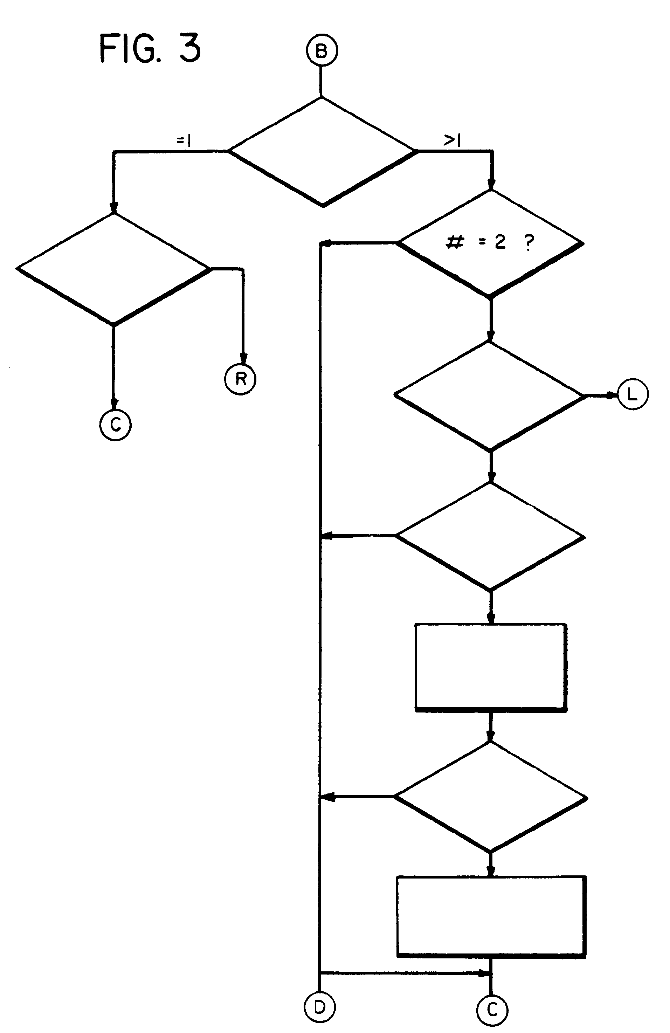

The microprocessor then enters the multikey patch subroutine shown in Fig. 3. It is first determined whether the number of keys pressed is equal to one or greater than one. If the number is greater than one, the routine on the right hand side of Fig. 3 is followed. This routine includes the "record" mode which is irrelevant to an understanding of the present invention and will therefore not be described further herein. It also allows operation of the "learn" routine described in U.S. Patent 4,703,359. This routine may be used advantageously in conjunction with the direct entry keyboard routine which is the subject of the present invention, but is not essential thereto. Specifically, the "learn" routine of U.S. Patent 4,703,359 can be used to select the required signal structure data from the tables in EPROM 16 or its equivalent if the model identification digits which have to be pressed by the user for the direct entry method of this invention are not available, i.e. if, for example, the manufacturer or model number is not listed in the instruction book, or the instructions have been lost. In any case, if the number of keys pressed exceeds one, the routine is not part of the present invention and will not be described in detail herein.

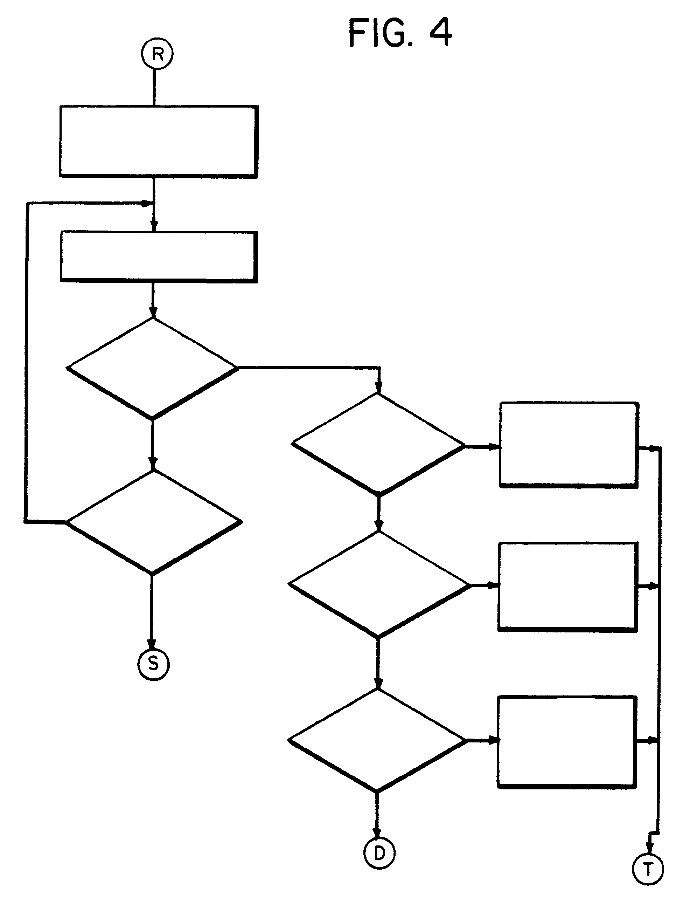

If the number of keys pressed is equal to one, the microprocessor first tests whether this is the record key. If the user has pressed the record key (herein also referred to as the enter initiate key), he has taken the initial step for implementing the present invention, i.e. for entering the necessary data for identifying a particular manufacturer and model number directly on the keyboard. Therefore if the answer is yes, the subroutine illustrated in Fig. 4 is followed.

As illustrated in Fig. 4, if the key that has been pressed is the record key, a time-out counter is loaded. The keyboard is then scanned. If the user has stopped pressing the record key but has not as yet pressed another key, the "key pressed?" test which is carried out next will yield a "no". If the time-out counter has not as yet run out, the subsequent "time-out" test will also yield a "no". This will cause a repetition of the keyboard scan. If, on the other hand, the time-out counter has run down, the microprocessor goes back to the sleep mode until further activation by the user.

As mentioned above, the procedure followed by the user when directly entering the manufacturer and model identification data into the transmitter is to press one of the power buttons after pressing the record button. Thus if the "key pressed" test yields an affirmative result, the microprocessor tests which of the power buttons (three illustrated in Fig. 4) has been pressed and stores category data in RAM 44 accordingly. In an alternative embodiment, this step is replaced by positioning category selector switch 32 and entering the so-selected category data in RAM 44.

If on the other hand none of the three power buttons has been pressed, the main program of Fig. 3 is reentered at D.

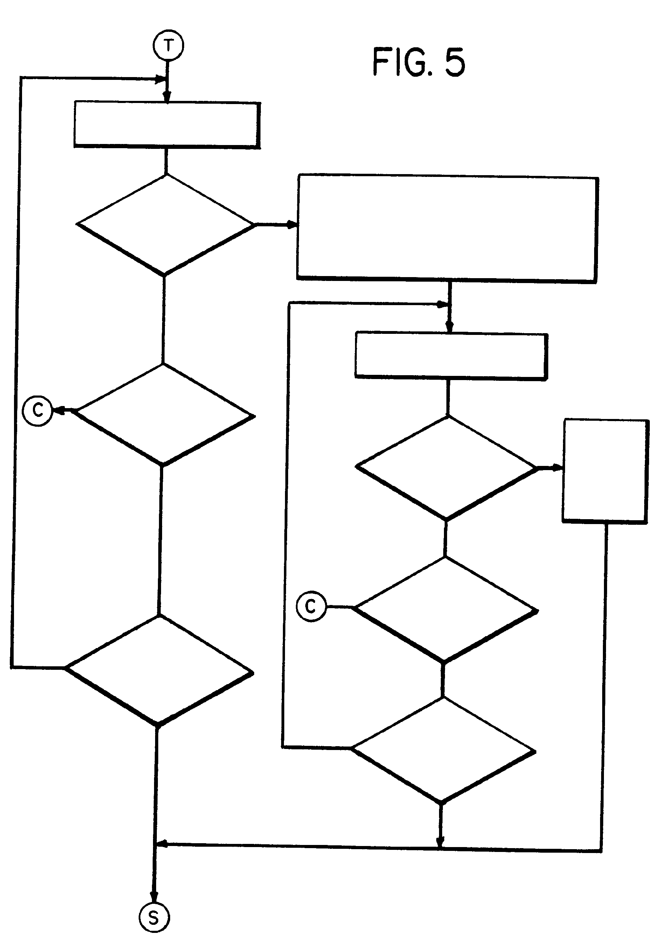

If one of the category power switches has been pressed, and the corresponding value entered in RAM 14, the program continues as illustrated in Fig. 5. The keyboard is again scanned. A test is carried out to see whether a digit has been entered. If no digit has been entered, it is tested whether a non-digit has been entered. If the answer to this is also a no, a ten second time-out is tested. If the time-out has expired, the microprocessor again returns to its sleep state. If the ten second time-out has not as yet expired, the keyboard scan is repeated.

At this point, again in accordance with the above-described procedure, the user will be entering the two digits which together identify the manufacturer and model number. If a digit has been entered, this is stored as the first digit of the two digit specific device entry pointer or address in RAM 44. Thereafter, the keyboard is again scanned. If the next digit has been entered, this digit is stored as the second digit and the transmitter again enters its sleep state. However, the specific device data required, for example, for calculating the address of a table in EPROM 16 is now stored in RAM 44. If no digit had been entered, it is again tested whether a non-digit has been entered. If so, the main program is reentered as described above with respect to a non-digit entry. If no key at all has been pressed, the time-out clock is again checked. If the clock has run out, the equipment again returns to its sleep state.

After the circuit has been reactivated upon pressing of a new key (which will signify a desired command such as "channel up"), the category switch is read again and the result stored in internal RAM 14 (see Fig. 2). The microprocessor executes the keyboard scan program as before, and as before, the multikey patch is entered. If the key is neither the record key nor the play key, the multikey patch (Fig. 3) is exited, and the keyboard position number is stored in the internal RAM 44. (Fig. 2)

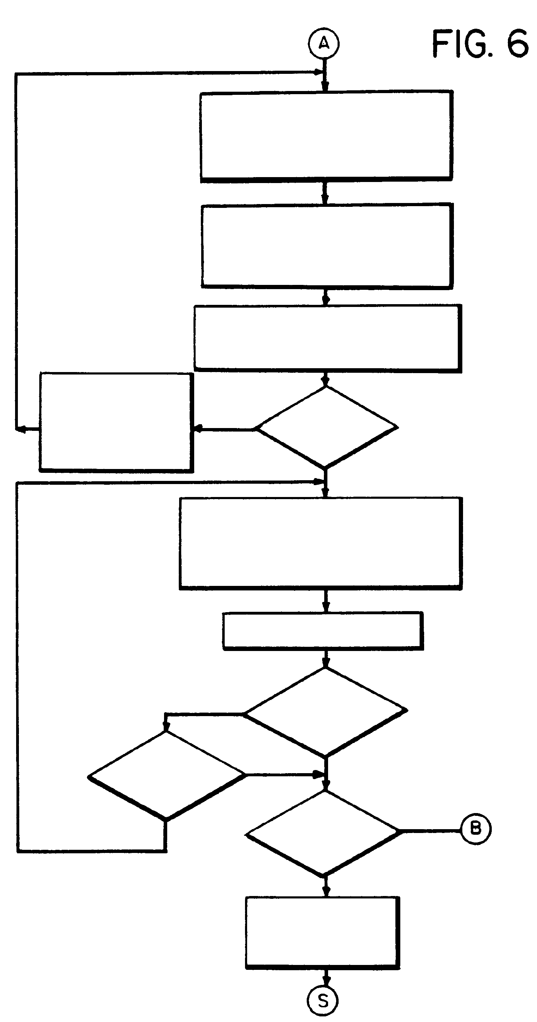

The program then continues as illustrated in Fig. 6. The mode of operation illustrated in Fig. 6 is the send mode.

In the send mode, the "decode" program in internal ROM 14 of microprocessor 10 uses the stored category data and stored signal structure identification data (specific device pointer) to calculate the address of a command table in EPROM 16. The command table stores the following data for each key position:
1. The command word bit pattern
2. The formatter starting address
3. A repeating/not repeating flag
4. Category type

The command table address calculated by the decode program is then combined with the command key data to read out the above data from EPROM 16. A comparison of the selected category type stored in RAM 44 and the category type found in the command table is carried out. If the two do not match, the category data in RAM is replaced with the category data found in the table. The program then reenters the decode program. This category matching step is required for use of commands in other categories from the one selected (e.g. T.V. volume up with VCR category selected). Since this process is explained in the parent case and is not required for understanding the present invention, no further explanation will be given here.

If a match in the category data has been found, the program jumps to the formatter starting address. Instructions are executed to send infrared code to the infrared driver. In other words, the formatter instructions stored in EPROM 16 cause the microprocessor to send the command word bit pattern to the IR driver in the format (carrier frequency, pulse type, timing, etc.) appropriate for the controlled appliance.

A renewed keyboard scan is then carried out. It is determined whether the same key is still pressed. If so, it is further tested whether the repeat flag is on. If the repeat flag is on, the program returns to the formatter starting address and the transmitter repeats sending the previously sent code.

If the same key is no longer pressed, it is determined whether any key is still pressed. If so, the program exits to the multikey program illustrated in Fig. 3. If not, the standby circuit is unlatched and the main program is reentered as illustrated in Fig. 2.

The method and apparatus of the present invention as described above allow the user to select the manufacturer and model number of the device to be controlled simply by four keyboard entries. The present invention can further be combined with the method and system disclosed in U.S. Patent 4,703,359. A remote control transmitter embodying both concepts allows the user to enter the manufacturers' model number by means of the keyboard when the keyboard entry values are available and allows the scanning method of the ′359 patent to be employed if the instruction book is lost or if the instruction book does not list the particular manufacturer. Since many firms sell other manufacturers' televisions, receivers, VCR'S, etc. under their own label, it is entirely possible that the scanning approach will show that the appliance can be controlled by the remote control transmitter even though no listing appeared in the instruction book.

Although the invention has been illustrated in a particular preferred embodiment, it is not intended to be limited thereto. Many variations in operation and construction will readily occur to one skilled in the art and are intended to be encompassed in the invention as set forth in the following claims.

## Claims

1. Remote control transmitter for transmitting device control signals remotely controlling a plurality of devices each belonging to a respective category, at least two devices of the same category requiring a different signal format, comprising:
memory means (16) permanently storing respective specific device formatting data for said plurality of devices at respective memory addresses, the memory means comprising at least different device formatting data for said two devices of the same category;
keyboard means (36) having a plurality of keys for generating keyboard output signals for a selected category of said plurality of devices;
means (10,26) for addressing said memory means to read specific device formatting data for a selected category in response to activation of said keys;
transmitter means (10,29,30) operative under control of said specific device formatting data to transmit device control signals towards said selected one of said plurality of devices, characterized in that the keyboard means (36) comprise a key for generating an entry initiate signal, and that the addressing means (10,26) are adapted to read the device formatting data for the selected category in accordance with keyboard output signals being generated following said entry initiate signal.

2. Method for generating device control signals remotely controlling a plurality of devices each belonging to a respective category, at least two devices of the same category requiring a different signal format, in a remote control transmitter having respective specific device formatting data for said plurality of devices permanently stored at respective memory addresses, said remote control transmitter further having a keyboard having a plurality of keys, comprising the step of transmitting device control signals to a selected one of said plurality of devices under control of the device formatting data stored for the selected category, characterized in that the method further comprises the steps of user activation of an entry initiate key and at least one address key to signify the memory address storing the specific device formatting data for said selected category.

## Patentansprüche

1. Fernsteuersender zur Fernsteuerung einer Vielzahl von Geräten, von denen jedes einer jeweiligen Kategorie angehört, wobei wenigstens zwei Geräte der gleichen Kategorie ein unterschiedliches Signalformat benötigen, und der Fernsteuersender folgendes umfaßt:
Speichermittel (16) zur dauerhaften Speicherung jeweiliger spezifischer Gerätformatierungsdaten für die genannte Vielzahl von Geräten an entsprechenden Speicheradressen, wobei die Speichermittel wenigstens verschiedene Gerätformatierungsdaten für die genannten zwei Geräte der gleichen Kategorie umfassen,
Tastaturmittel (36) mit einer Vielzahl von Tasten zur Erzeugung von Tastaturausgangssignalen für eine gewählte Kategorie aus der genannten Vielzahl von Geräten,
Mittel (10, 26) zur Adressierung der genannten Speichermittel, um in Reaktion auf eine Betätigung der genannten Tasten bestimmte Gerätformatierungsdaten für eine gewählte Kategorie zu lesen,
Sendemittel (10, 29, 30), die unter Steuerung der genannten spezifischen Gerätformatierungsdaten betrieben werden, um Gerätesteuerungssignale in Richtung eines gewählten Gerätes aus der genannten Vielzahl von Geräten zu senden, dadurch gekennzeichnet, daß die Tastaturmittel (36) eine Taste zur Erzeugung eines Eingabeinitialisierungssignals umfassen und daß die Adressierungsmittel (10, 26) so eingerichtet sind, daß sie die Gerätformatierungsdaten für die gewählte Kategorie in Übereinstimmung mit Tastaturausgangssignalen lesen, die im Anschluß an die das genannte Eingabeinitialisierungssignal erzeugt werden.

2. Verfahren zur Erzeugung von Gerätesteuerungssignalen, die eine Vielzahl von Geräten fernsteuern, von denen jedes einer jeweiligen Kategorie angehört, wobei wenigstens zwei Geräte der gleichen Kategorie ein unterschiedliches Signalformat benötigen, in einem Fernsteuersender mit jeweiligen spezifischen an entsprechenden Speicheradressen gespeicherten Gerätformatierungsdaten für die genannte Vielzahl von Geräten, wobei der genannte Fernsteuersender außerdem eine Tastatur mit einer Vielzahl von Tasten hat und einen Schritt umfaßt, um unter der Steuerung der für die gewählte Kategorie gespeicherten Formatierungsdaten Gerätesteuerungssignale zu einem gewählten Gerät aus der genannten Vielzahl von Geräten zu senden, dadurch gekennzeichnet, daß das Verfahren außerdem die Schritte zur Betätigung einer Einbabetaste durch einen Benutzer und wenigstens eine Adreßtaste umfaßt, um die Speicheradresse anzugeben, an der die spezifischen Gerätformatierungsdaten für die genannte gewählte Kategorie gespeichert sind.

## Revendications

1. Emetteur de commande à distance pour commander à distance une pluralité d'appareils appartenant chacun à une catégorie respective, au moins deux appareils de la même catégorie nécessitant un format de signal différent, comprenant :
un moyen à mémoire (16) stockant de manière permanente des données de formatage d'appareils spécifiques pour ladite pluralité d'appareils à des adresses respectives de la mémoire, le moyen à mémoire comprenant au moins différentes données de formatage d'appareils pour lesdits deux appareils de la même catégorie;
un moyen à clavier (36) comportant une pluralité de touches pour générer des signaux de sortie de clavier pour une catégorie sélectionnée de ladite pluralité d'appareils;
un moyen (10, 26) pour adresser ledit moyen à mémoire afin de lire les données de formatage des appareils spécifiques pour une catégorie sélectionnée en réponse à l'activation desdites touches, et
des moyens d'émission (10, 29, 30) susceptibles, sous la commande desdites données de formatage des appareils spécifiques, d'émettre des signaux de commande vers ledit appareil sélectionné parmi ladite pluralité d'appareils, caractérisé en ce que le moyen à clavier (36) comprend une touche pour générer un signal d'amorçage d'entrée et le moyen d'adressage (10, 26) est à même de lire les données de formatage des appareils de la catégorie sélectionnée conformément à des signaux de sortie du clavier qui sont générés après ledit signal d'amorçage d'entrée.

2. Procédé de génération de signaux de commande d'appareils commandant à distance une pluralité d'appareils dont chacun appartient à une catégorie respective, au moins deux appareils de la même catégorie nécessitant un format de signal différent, dans un émetteur de commande à distance comportant des données de formatage d'appareils spécifiques respectifs pour ladite pluralité d'appareils stockées en permanence dans des adresses de mémoire respectives, ledit émetteur de commande à distance comportant, en outre, un clavier présentant une pluralité de touches, le procédé consistant à émettre des signaux de commande d'appareils vers un appareil sélectionné de ladite pluralité d'appareils sous la commande de données de formatage des appareils stockées pour la catégorie sélectionnée, caractérisé en ce que le procédé consiste, en outre, à activer par l'utilisateur une touche d'amorçage d'entrée et au moins une touche d'adresse pour signifier l'adresse de mémoire stockant les données de formatage d'appareils spécifiques pour ladite catégorie sélectionnée.
